# EUROPEAN PATENT APPLICATION

(11) **EP 2 335 531 A1**
(43) Date of publication of application: **22.06.2011**
(21) Application number: 09179552.6
(22) Date of filing: 17.12.2009
(51) Int. Cl.: A47J 31/40, A47J 47/01

(54) **Powder dispensing canister**

(71) Applicant: Nestec S.A., 1800 Vevey (CH)
(72) Inventor: Gigandet, Christel, 1617 Remaufens (CH); Ramaioli, Marco, 1009, Pully (CH); Murphy, Richard Luke, 1475 Montbrelloz (CH); Rey, Cédric, 1315 La Sarraz (CH); Filliol, Carine, 25370 Métabief (FR); Jaccard, Sandrine, 1450 Ste-Croix (CH)
(74) Representative: Ducreux, Marie

(57) **Abstract**

The invention concerns a dispensing canister comprising :
- a reservoir,
- rotatable volumetric dosing means longitudinally extending through the bottom of the reservoir, wherein the bottom of the reservoir is a U shaped throat in which the rotatable volumetric dosing means is lodged, the upper point of the U shaped throat extending at least up to the top of the rotatable volumetric dosing means.

## Description

The present invention relates to improvements in dosing of a powder from a canister, in particular, for the use in foodservice dispensing equipment. The canister of the invention may, for example, be used to dispense in a more consistent manner metered quantities of dry powdered food material.

Various automated beverages or food dispensers for making hot or cold reconstituted products are known in the art. In a conventional beverage or food dispenser, a metered amount of water-soluble beverage-forming or food-forming powder supplied from a storage canister, and a complementary metered amount of hot or cold water supplied from a water source are mixed to produce a final product, which is dispensed into a cup or glass. There are several identified issues with dispensing these powders in the traditional canisters.

The first issue relates to the consistency of powder dosing that more particularly refers to the dose-to-dose variation. Typically, the gram-throw of powder dramatically decreases after a certain number of throws and the reconstituted beverage or food becomes more diluted. In terms of product quality, the consistency of the product is important for meeting the satisfaction of the consumer. If the dose-to-dose variation is too large, e.g., on the order of 5 % of powder discrepancy or more, it affects the in-cup quality of the product in a way that becomes perceptible for the consumer.

The second issue relates to the powder evacuation out of the canister which may be incomplete or inconsistent within a predetermined tolerance. In short, the canister is unable to empty up to a certain point and a significant amount of powder remains. In traditional canisters, powder evacuation issues include doses or gram-throws that are below the target throw as well as powder that remains in the canister and that the dosing mechanism cannot further deliver. In terms of autonomy, a canister that delivers a small volume of powder within the specifications must be more frequently filled by the operator, in order for the beverage not to become unacceptably weak when the powder level becomes low. Therefore, such low performing canisters may impact product quality and may require more attention from the operator in refilling and maintenance of the device. Moreover powder evacuation issues cause hygiene problems since a part of the powder cannot be evacuated and can stay in the canister for a longer time than its shelf life.

Systems have been developed which consist of a single rotary wheel and a breaking mechanism such as wire tapers or springs attached to the wheel. Typical canisters are described in U.S. patents 3,013,701 and 4,207,995.

Dosing is usually performed by an auger, either a spring or screw auger. The dosing end of the canister contains an exit that directs the powder towards the mixing area as it exits. US 2003/0234261 provides such a canister in which agitating wheels are operatively associated with the rotatable volumetric dosing means to rotate in the reservoir upon actuation of the rotatable volumetric dosing means. This prior art also discloses the use of a spring auger as rotatable volumetric dosing means and of a solid insert placed within the spring auger to improve dosing consistency and reduce the dose-to-dose variation.

Yet installing pieces in the powder itself is not always recommended, for several reasons. First of all, pieces in the powder have to be compatible with edible products and should not decrease the quality of the powder. Moreover, pieces in the canister take a significant place, decreasing the volume dedicated to the powder. Finally, these pieces influence the powder density, by compressing the powder on one side of the wheel and lightening it on the other side, generating variations in the dosage.

Then there is still a need to improve powder dosing canisters in the point of view of the consistency of powder dosing and the complete evacuation of the powder out of the canister.

The invention concerns a dispensing canister comprising :
- a reservoir,
- rotatable volumetric dosing means longitudinally extending through the bottom of the reservoir, wherein the bottom of the reservoir presents a U shaped throat in which the rotatable volumetric dosing means is lodged, the upper point of the U shaped throat extending at least up to the top of the rotatable volumetric dosing means.

The reservoir can present any shape either curved or straight. It generally presents two terminal walls and two side walls that are preferably straight walls. The reservoir generally includes two side walls, while the terminal walls include a front wall and a rear wall. At its bottom, the reservoir presents a U shaped throat and the dosing means is arranged in this U shaped throat of the reservoir between the two terminal walls. The upper point of the U shaped throat extends at least up to the top of the rotatable volumetric dosing means.

Preferably, at least a portion of at least one of the walls reservoir above the U shaped throat is inclined. Actually, the four walls of the reservoir above the U shaped throat can be vertical but then the inside volume of the reservoir is usually small and has to be frequently refilled. Then it is preferable that at least a portion of at least one of the walls reservoir is outwardly inclined so as to increase the volume of the reservoir. Generally each of the four walls presents at least a portion above the U shaped throat that is inclined. Generally each of the two side walls presents at least a portion above the U shaped throat that is inclined according to the same angle α. In the same manner, generally at least one of the two peripheral walls presents at least a portion above the U shaped throat that is inclined according to the same angle β. In order to optimize the foot print of the reservoir in the machine, only the portion just above the U shaped throat can be inclined and the rest of the wall can be vertical, particularly in the case of the peripheral walls. Preferably the portion(s) of the reservoir wall(s) above the U shaped throat are outwardly inclined according to an angle of at most 25 °, preferably at most 20°, with the vertical.

According to another preferred embodiment, the front portion of the rotatable volumetric dosing means longitudinally extends out of the bottom of the reservoir and said front portion extending out of the reservoir is lodged in an empty cylinder. The cylinder generally presents the same diameter as the rotatable volumetric dosing means so that the rotatable volumetric dosing means can freely turn inside.

The volumetric dosing means can be a screw auger or a spring auger. Preferably, the diameter of the screw auger or the spring auger is essentially the same as the diameter of the half cylinder part of the U shaped throat. Then the auger is able to freely rotate inside the half pipe.

According to another preferred embodiment, the auger can be arranged to transport a volume of powder that varies as a function of the longitudinal position along the auger. In the preferred embodiment, the auger is arranged to comprise a transport volume for the powder that is lower in the rear portion of the auger than in the front portion of the auger. The volume can increase on a progressive or stepped basis. The volumetric dosing means can be a spring auger with a solid insert located within the spring in a rear portion of the auger. This insert can present a decreasing cross section along the spring length from the rear end to the front end. Hence, the solid insert creates a reduction of the capacity of the auger to transport powder in this area as compared to the front area. This insert has preferably the shape of a cone pointing its sharp end near the front side of the canister.

According to a specific mode, the ratio of the throat length on the throat width is preferably at most 6.

According to another embodiment the dispensing canister can comprise tapping means or vibrating means to tap the external surface of the container. But the container of the present invention usually does not comprise any agitating, tapping or vibrating means inside the powder container volume.

The dispensing canister of the present invention is preferably used for dispensing a beverage-forming or food-forming powder that is supplied to the reservoir.

The present invention also relates to a beverage dispenser comprising a dispensing canister such as described above.

### Brief description of the drawings

The characteristics and advantages of the invention will be better understood in relation to
- Figures 1 is a perspective view of the dispensing canister of the present invention.
- Figure 2 is the section view AA of the dispensing canister of Figure 1.
- Figure 3 is a side view of the dispensing canister of Figure 1.
- Figure 4 is the section view BB of the dispensing canister of Figure 1.
- Figure 5 is a transversal section of the bottom part of a reservoir tank of a dispensing canister according to the prior art.
- Figures 6-8 are graphs illustrating the dosing variation of the canister of the present invention and of a canister of the prior art for the dispensing of different powders.

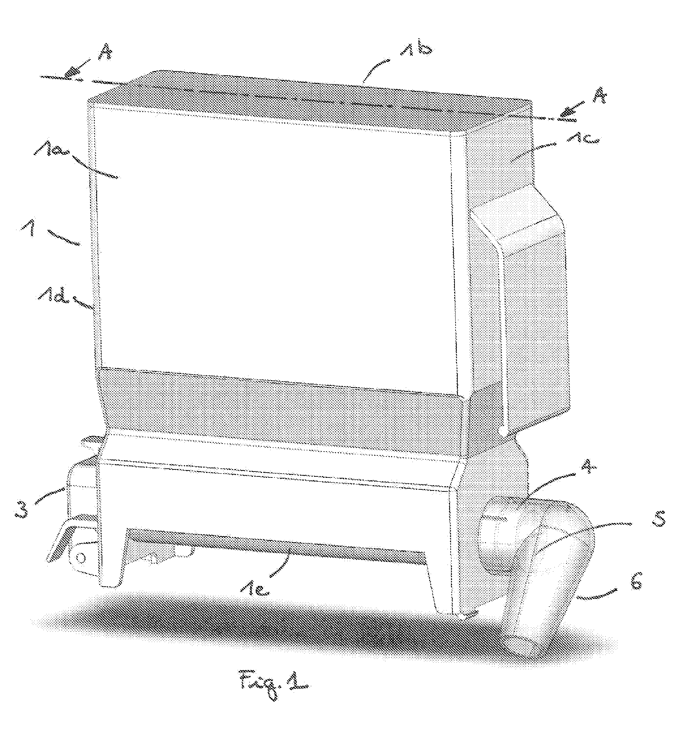

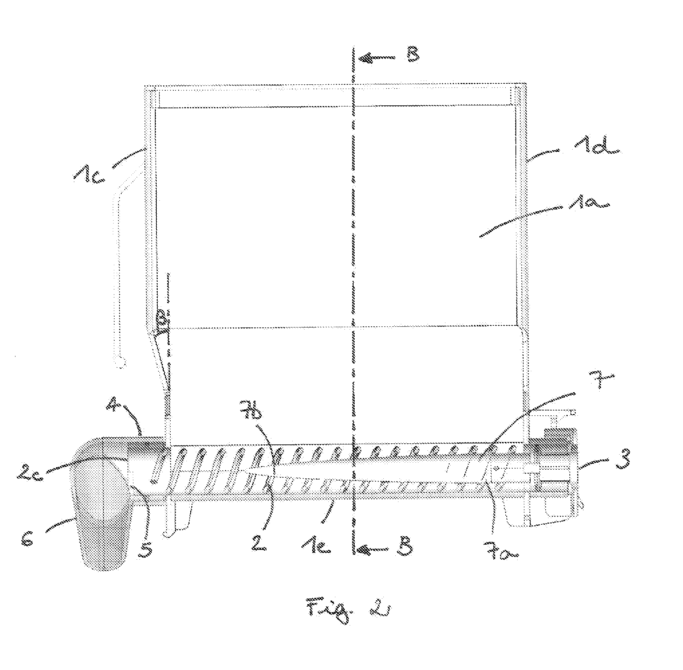

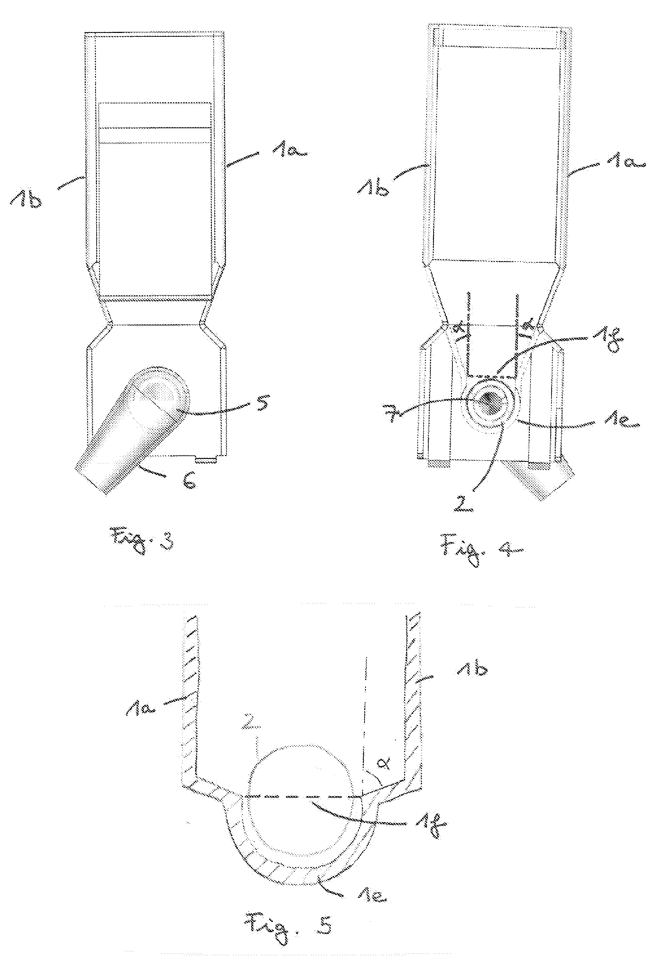

Figure 1 illustrates the dosing canister of the present invention. It comprises a reservoir 1 presenting two side walls 1 a, 1b and two terminal walls : a front terminal wall 1c and a rear terminal wall 1d. The front part of the canister is considered to be the part situated in the vicinity of the outlet. The bottom 1e of the reservoir is a U shaped throat 1e in which rotatable volumetric dosing means is lodged as illustrated in Figures 2 and 4. The illustrated rotatable volumetric dosing means is a spring auger 2 but it could also be a screw auger or any other volumetric dosing means. It extends through the entire length of the reservoir at the bottom end thereof. The rear end of the auger is rotatably supported by an aperture of the rear terminal wall 1d and terminates by a connector 3. The connector 3 is intended to be linked to a shaft of a conventional electrical actuating system such as DC motor. An insert 7 is present inside the auger spring. This insert presents a decreasing cross section along the spring length from the rear end 7a to the front end 7b. According to the invention, the upper point 1f of the U shaped throat extends at least up to the top of the rotatable volumetric dosing means, that is here the top of the auger spring : this point 1f appears on the section view of the reservoir 1 according to Figure 4. It means that the rotatable volumetric dosing means are vertically completely lodged in the U shaped throat. Above the U shaped throat, the three walls 1a, 1b, 1c of the reservoir are partially outwardly inclined according to an angle α of 20° and β of 20° with the vertical. Due to these angles, the reservoir presents a bigger storing volume than if the walls were vertical. Yet the choice of the specific value inferior to 20° plays also a role in the improvement of the dosing accuracy of the canister and its full emptying.

The front portion 2c of the rotatable volumetric dosing means longitudinally extends out of the bottom of the reservoir 1e and is lodged in a closed cylinder 4. The cylinder presents essentially the same diameter as the auger spring. An optional chute 6 can be mounted at the end of the cylinder 4 and serves to redirect the flow of powder exiting from the canister for example in direction of a mixing bowl or a dispensing line. A weir 5 can also be present to partially_obstruct the front end of the cylinder. This weir appears in Figures 1 and 3 in which the chute 6 has been made partially transparent.

Compared to the dispensing canister of the prior art, the dispensing canister of the present invention presents less dosing variations, a higher refill point, less standard deviation before the refill point and it decreases the quantity of powder remaining in the container.

### EXAMPLES

A canister according to the present invention and a canister according to the prior art were filled with different types of powders. These powders were delivered by the dispensing canisters and their dosing variations, their evacuation rate, their standard deviation from the refill point and the quantity of powder remaining in the container at the end of the tests were measured.

In the examples the canister of the present invention was the one illustrated in Figures 1-4.

Contrary to the canister of the present invention, in the canister of the prior art :
- the spring auger was lodged in a half pipe (1f), so that the spring (2) was only half submerged in the pipe, half of the spring extending out of said half pipe as illustrated in Figure 5.
- the side walls (1 a, 1 b) of the reservoir above the spring auger presented an angle α of more than 20° with the vertical.
- the peripheral walls of the reservoir above the spring auger presented an angle β of 20° with the vertical (not represented).

The canister of the prior art also comprised a rotating wheel which was driven by the engagement of its peripheral teeth with the spring auger. No insert was present in the spring auger.

### Example 1

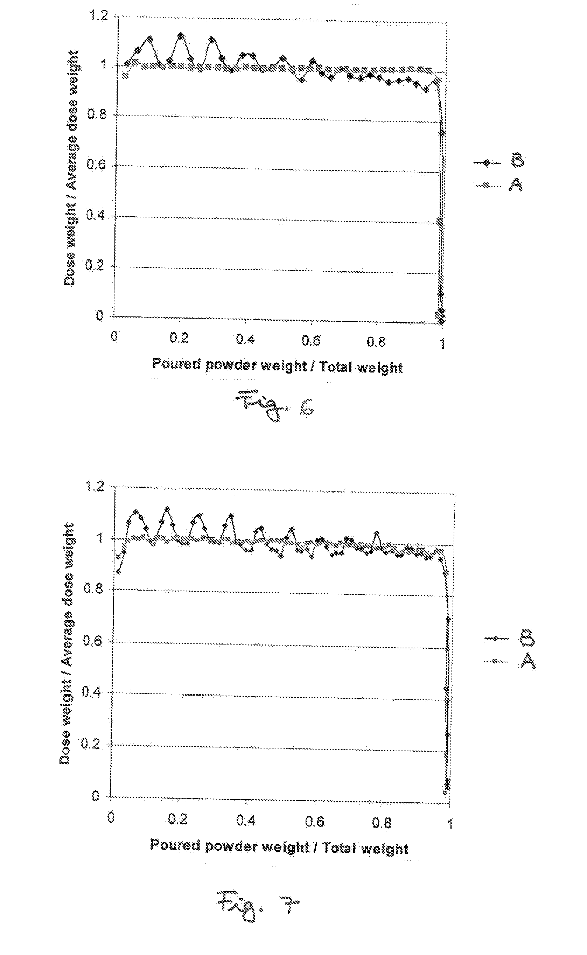

The dosing variations of the canisters were illustrated by representing the ratio of the dose weight / the average dose weight in function of the ratio of the poured powder weight / the weight put in the canister at the beginning of the test for each powder. The results are illustrated by Figures 6-8.

The graphs were made for each powder with the canister according to the invention and the canister according to the prior art.

Figure 6 illustrates the dosing variation of a canister according to the present invention (graph A) and according to the prior art (graph B) for dosing and dispensing a cappuccino powder. It appears that the ratio of the dose weight / the average dose weight for the dispensing canister of the present invention is almost equal to 1 from the time the canister is full until it is emptied, whereas the ratio of the dose weight / the average dose weight for the dispensing canister of the prior art varies between 0,83 and 1,1.

Figure 7 illustrates the same dosing variations for a chocolate powder.

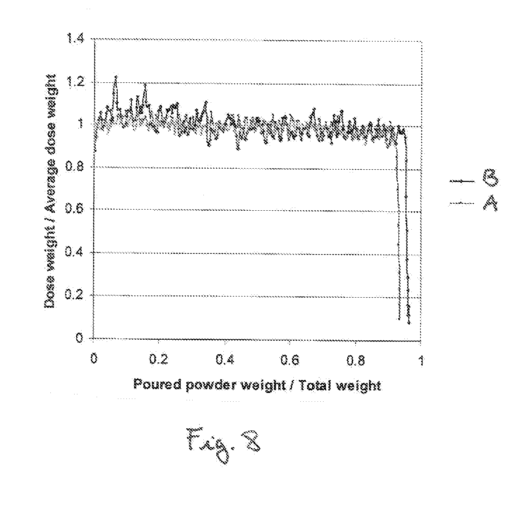

Figure 8 illustrates the same dosing variations for a coffee powder.

### Example 2

The evacuation rate corresponds to the percentage of powder weight dispensed from the reservoir compared to the powder weight filled in the reservoir when the dosing variation moves away from 1.

The evacuation rate of the canister of the present invention, calculated as the mean of 14 different powders (including creamer, coffee, chocolate, cappuccino topping, ...) was 91 %, whereas it was 67 % for the canister of the prior art.

### Example 3

The standard deviation was computed before the refill point of the canister of the present invention, calculated as the mean of 14 different powders (including creamer, coffee, chocolate, cappuccino topping, ...) was 2,2 %, whereas it was 5,2 % for the canister of the prior art.

### Example 4

The quantity of powder remaining in the container at the end of the tests corresponds to the powder weight that cannot be dispensed by the dosing means and that stays in the reservoir.

This quantity of powder for the canister of the present invention, calculated as the mean of 14 different powders (including creamer, coffee, chocolate, cappuccino topping, ...) was 0,4 %, whereas it was 3,8 % for the canister of the prior art.

## Claims

1. A dispensing canister comprising :
- a reservoir (1),
- rotatable volumetric dosing means (2) longitudinally extending through the bottom of the reservoir (1e),
wherein the bottom of the reservoir is a U shaped throat in which the rotatable volumetric dosing means is lodged, the upper point of the U shaped throat extending at least up to the top of the rotatable volumetric dosing means.

2. A dispensing canister according to Claim 1, wherein the reservoir (1) has two terminal walls (1 c, 1 d) and two side walls (1 a, 1 b).

3. A dispensing canister according to Claim 2, wherein at least a portion of at least one of the reservoir walls above the U shaped throat is inclined.

4. A dispensing canister according to Claim 3, wherein the at least portion of at least one of the reservoir walls above the U shaped throat is outwardly inclined according to an angle of at most 25 °, preferably at most 20°, with the vertical.

5. A dispensing canister according to any of the precedent claims, wherein the front portion (2c) of the rotatable volumetric dosing means longitudinally extends out of the bottom of the reservoir and said front portion extending out of the reservoir is lodged in a cylinder (4).

6. A dispensing canister according to any of the precedent claims, wherein the volumetric dosing means (2) is a screw auger or a spring auger.

7. A dispensing canister according to any of the precedent claims, wherein the volumetric dosing means is a spring auger with a solid insert (7) located within the screw in a rear portion of the auger.

8. A dispensing canister according to claim 7, wherein the insert present a decreasing cross section along the spring length from the rear end to the front end.

9. A dispensing canister according to any of the precedent claims, wherein the ratio of the throat length on the throat width is at most 6.

10. A dispensing canister according to any of the precedent claims, wherein it is used for dispensing a beverage-forming or food-forming powder that is supplied to the reservoir.

11. Beverage dispenser comprising a dispensing canister according to any of the Claims 1 to 9.
